# EUROPEAN PATENT APPLICATION

(11) **EP 2 874 131 A2**
(43) Date of publication of application: **20.05.2015**
(21) Application number: 14192988.5
(22) Date of filing: 13.11.2014
(51) Int. Cl.: G08G 1/01

(54) **Probe information management device, probe information management system, and probe information management method**

(30) Priority: 15.11.2013 JP 2013236678
(71) Applicant: Hitachi, Ltd., Tokyo 100-8280 (JP)
(72) Inventor: Kiyama, Noboru, Tokyo 100-8280 (JP); Osafune, Tatsuaki, Tokyo 100-8280 (JP)
(74) Representative: MERH-IP Matias Erny Reichl Hoffmann

(57) **Abstract**

A probe information management device, includes: a probe condition specification unit 211 that generates a condition input screen for a first user to designate, using an input device 230, specification conditions including a first area, a stopover location, a second area, and a date and time, and that outputs the condition input screen to an output device 240; and a probe information acquisition unit 212 that, based on the specification conditions, acquires specified probe information corresponding to a moving history of a vehicle that has passed through, in order, a ground point within the first area, the stopover location, and a ground point within the second area, wherein: the first area and the second area are both specified by drawing input, using the input device 230; and when outputting the specified probe information to the output device 240, the probe condition specification unit 211 outputs the first area and the second area to the output device 240 as drawings.

## Description

The disclosure of the following priority application is herein incorporated by reference: Japanese Patent Application No. 2013-236678, filed November 15, 2013.

The present invention relates to a probe information management device, to a probe information management system, and to a probe information management method, that employ the traveling history of an automobile (i.e. probe data).

In Japanese Laid-Open Patent Publication 2012-58870, there is disclosed a probe information supply server that, in response to a search request from an onboard terminal or the like specifying an area, finds and transmits to an onboard terminal trip information showing that a vehicle or the like has entered into that area, or trip information showing that the vehicle h or the like as gone out of that area.

According to the technique disclosed in the abovementioned Japanese Laid-Open Patent Publication 2012-58870, there is not necessarily any mutual resemblance between the track of entering into the specified area and the track of going out of that area. Due to this, when some stopover location is common to many vehicles that travel upon similar tracks, it is difficult to gather probe data for ascertaining what types of facility are often used by those vehicles before and after passing through that location.

According to the first aspect of the present invention, a probe information management device, comprises: a probe condition specification unit that generates a condition input screen for a first user to designate, using an input device, specification conditions including a first area, a stopover location, a second area, and a date and time, and that outputs the condition input screen to an output device,; and a probe information acquisition unit that, based on the specification conditions, acquires specified probe information corresponding to a moving history of a vehicle that has passed through, in order, a ground point within the first area, the stopover location, and a ground point within the second area, wherein: the first area and the second area are both specified by drawing input, using the input device; and when outputting the specified probe information to the output device, the probe condition specification unit outputs the first area and the second area to the output device as drawings.

According to the second aspect of the present invention, a probe information management system comprises: a probe information management device according to the first aspect; and an information device that moves with the vehicle, wherein: the probe information management device comprises a telematics center and an application server; the information device generates the specified probe information and transmits the specified probe information to the telematics center; the application server includes the probe condition specification unit and the probe information acquisition unit; and the probe information acquisition unit acquires the specified probe information from the telematics center.

According to the third aspect of the present invention, a probe information management method, comprises: generating a condition input screen for a first user to specify, using an input device, specification conditions including a first area, a stopover location, a second area, and a date and time to output the condition input screen to an output device; and acquiring specified probe information corresponding to the moving history of a vehicle that has passed through, in order, a ground point within the first area, the stopover location, and a ground point within the second area, based on the specification conditions, wherein, each of the first area and the second area is specified by drawing input.

### BRIEF DESCRIPTION OF THE DRAWINGS

FIG. 1 is a figure showing an example of the overall structure of a probe information management system;
FIGS. 2A-2C are figures showing examples of information in probe information databases that are managed by a telematics center and by an onboard information device;
FIGS. 3A-3B are figures showing examples of information in probe information databases managed by the telematics center;
FIG. 4 is a figure showing an example of a sequence for transmission and reception of probe data between the onboard information device and the telematics center;
FIG. 5 is an example of a flow chart for matching decision processing performed by the telematics center;
FIG. 6 is a figure showing an example of a sequence for probe request processing executed between an application server and the telematics center;
FIG. 7 is a figure showing an example of a flow chart for statistical information generation processing performed in the telematics center;
FIG. 8 is a figure showing an example of the structure of a screen displayed upon an output device of the application server;
FIG. 9 is a figure showing an example of the structure of another screen displayed upon the output device of the application server; and
FIG. 10 is a figure showing an example of the structure of a screen displayed upon an output device of the onboard information device.

### DESCRIPTION OF EMBODIMENTS

Services of various types that apply probe data showing the traveling history of an automobile are being provided nowadays. A major component of such probe data is series of points of position information specifying the traveling track, and CAN information from the vehicle is attached to these series of points. By utilizing this information, for example, it is possible to determine that congestion is occurring at a ground point where the vehicle speed is low, or the like. Probe data is gathered from each automobile as it traverses a network. A TCU (Telematics Control Unit) or a smart phone may be employed as an onboard information device for transmitting such probe data.

Probe data transmitted from each automobile is accumulated in a telematics center, to which one or more application servers that supply services are connected. Under conditions that vary according to the service for which the probe data is to be used by the application server, the telematics center extracts probe data required for supplying that service and calculates a valuable statistical value by analyzing the extracted data, and then this valuable statistical value that has thus been calculated is employed for the service.

As methods for limiting the probe data to be extracted, the methods of setting a position or a time point as an extraction condition have been considered. It is necessary for each service supplier to input to the telematics center, via the application server, extraction conditions as specification conditions for the probe data. For example, specification of an area through which the track specified by the probe data must pass may be performed in order to search for probe data corresponding to the track of a vehicle that has arrived at some facility after having passed through some specified area, or, conversely, in order to search for probe data corresponding to the track of a vehicle that has passed through some specified area after having departed from some facility. A technique is per se known of, as a result, displaying as a recommended spot a facility that is frequently utilized as a travel destination to which vehicles travel out from some specified area, or as a traveling start point from which vehicles travel into that specified area.

In this type of technique, as a method of limiting the probe data for extracting recommended spots, it has been considered to perform specification of a single area and designation of time; but, since in this case only one area can be specified, accordingly it is not possible to acquire probe data while limiting the subjects for extraction to probe data generated by onboard information devices that have traveled from some area to a different area. According to the prior art technique, it is difficult to perform limitation of the probe data to probe data that satisfies a plurality of positional conditions, such as for example limitation, as a subject for service utilization, to probe data corresponding to the track of a vehicle that, after having passed through some area and having visited a specified facility, has subsequently passed through some other area.

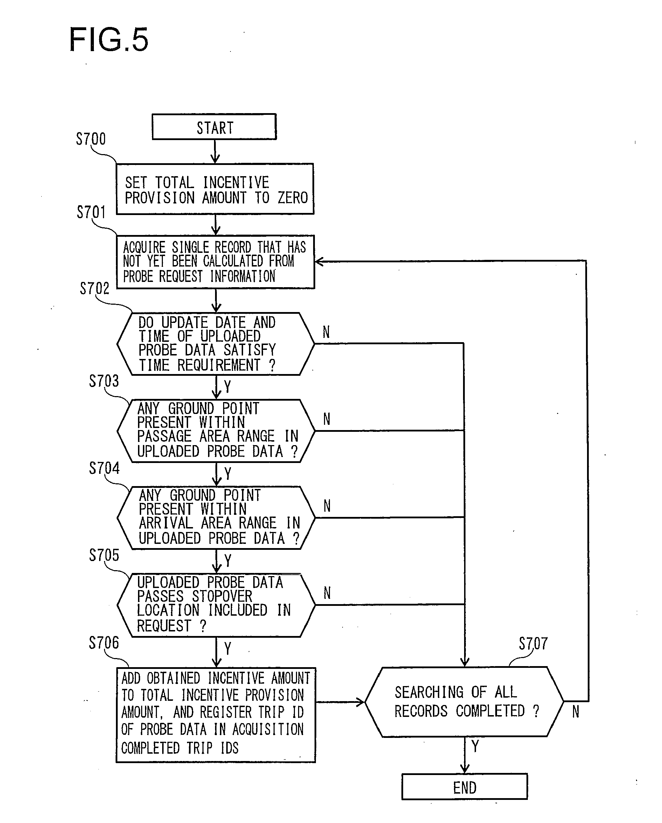

Moreover, with a prior art type probe information management system, since the incentive amounts to be provided for the probe data are uniquely determined, accordingly there is a possibility that a high incentive may be provided for probe data that is not useful for the employing application, while a low incentive may be provided for probe data that is useful. According to the present invention, it is possible to designate conditions upon subject data extraction that are required by each objective of probe data utilization. Moreover, as will be described hereinafter with reference to FIG. 5, by managing all together the opportunities for providing incentives to the user of the onboard information device, it is possible to increase the opportunity for that user to enjoy incentives from a plurality of service businesses.

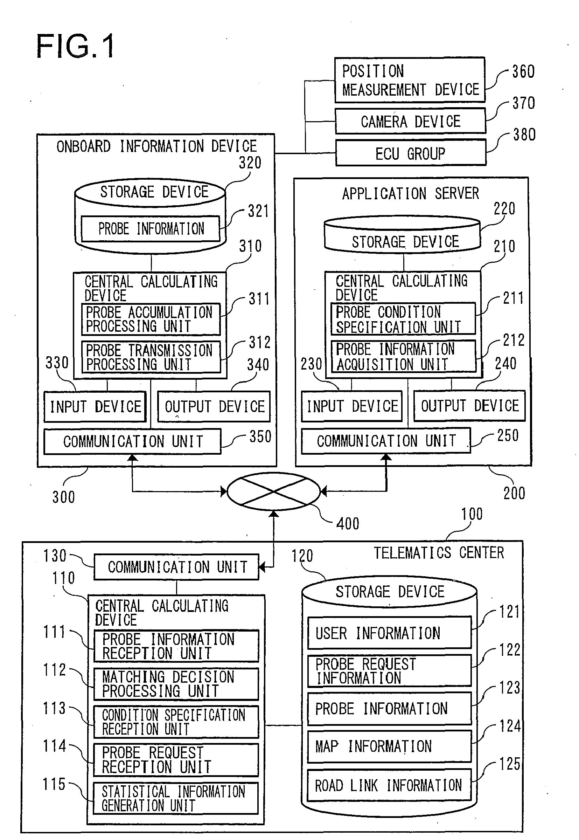

In the following, an embodiment of the present invention will be explained with reference to FIGs. 1 through 10. An example of the structure of a probe information management system according to an embodiment of the present invention is shown in FIG. 1. As shown in FIG. 1, the probe information management system includes a telematics center 100 that gathers probe data corresponding to the moving history of a vehicle and performs processing thereof, one or more application servers 200 that request and utilize specified probe information which is based upon probe data satisfying certain specification conditions, and one or more onboard information devices 300 that transmit probe data. The telematics center 100 and the application servers 200 constitute a probe information management device. A network 400 enables communication between the telematics center 100 and the application servers 200 and the onboard information devices 300. For example, the network 400 may be a mobile telephone network, the internet, a short-distance wireless communication network such as a wireless LAN or the like, or a network that consists of a plurality of such networks in combination, or the like.

The telematics center 100 comprises a central calculating device 110, a storage device 120, and a communication unit 130. The central calculating device 110 may, for example, be a computer that includes a CPU (Central Processing Unit) and a RAM (Random Access Memory) and so on. By executing a predetermined computer program, the central calculating device 110 implements various types of functions of the telematics center, as will be described hereinafter. A probe information reception unit 111 that receives probe data transmitted from the onboard information devices 300, a matching decision processing unit 112 that makes decisions as to whether or not received probe data matches requests from the application servers, a condition specification reception unit 113 that receives probe data condition specification requests from the application servers, a probe request reception unit 114 that receives probe data requests from the application servers, a statistical information generation unit 115 that, in response to requests from the application servers, generates statistical information about probe data satisfying specified conditions as specified probe information, and so on are included in the central calculating device 110. Specification conditions that include a passage area, a stopover location, and an arrival area, and a date and time, as will be explained hereinafter, these are specified by a probe condition specification unit comprised in the central calculating device of the application server 200, are included in the probe data specification request received by the condition specification reception unit 113.

The storage device 120 may, for example, comprises an HDD (Hard Disk Drive), an SSD (Solid State Drive), a flash memory, a ROM (Read Only Memory), or the like. A computer program executed by the central calculating device 110 and groups of data required for execution of this computer program and so on are stored in the storage device 120. User information 121 for managing originators of transmission of probe data, probe request information 122 in which probe data requests from the application servers 200 are accumulated, probe information 123 in which probe data transmitted from the onboard information devices is accumulated, map information 124, road link information 125 by which IDs of roads corresponding to this map information are managed and accumulated, and so on are stored in the storage device 120.

The communication unit 130 comprises a network card or the like that is compatible with a communication standard required for cable communication via a cable LAN (Local Area Network), for wireless communication via a wireless LAN or the like, or both thereof. The communication unit 130 transmits and receives data to and from the application servers 200 and the onboard information devices 300 based on data protocols of various types. Data transmitted from the application servers 200 is delivered to the probe request reception unit 114, while data transmitted from the onboard information devices 300 is delivered to the probe information reception unit 111.

Each of the application servers 200 comprises a central calculating device 210, a storage device 220, an input device 230 such as a keyboard or a mouse or the like, an output device 240 such as a display or the like, and a communication unit 250. It would be acceptable for the input device 230 and the output device 240 to be physically the same device, such as a touch panel, for example.

The central calculating device 210 may comprise, for example, a CPU and RAM or the like, and performs processing for implementing the functions of the application server 200 by executing a predetermined operating program. Moreover, in the central calculating device 210, there are also included a probe condition specification unit 211 that specifies conditions for probe data request to the telematics center 100 according to input from the user of the application server 200, in other words that specifies specification conditions, and a probe information acquisition unit 212 that requests specified probe information based on the result of gathering probe data satisfying those specification conditions corresponding to input from the user of the application server 200.

The storage device 220 may, for example, comprises an HDD, an SSD, a flash memory, a ROM, or the like. A computer program executed by the central calculating device 210 and groups of data required for execution of this computer program and so on are stored in the storage device 220.

The communication unit 250 comprises a network card or the like that is compatible with a communication standard required for cable communication via a cable LAN or for wireless communication via a wireless LAN, or both or the like. The communication unit 250 transmits and receives data to and from the telematics server 100 based on data protocols of various types. The data transmitted from the telematics server 100 is delivered to the probe information acquisition unit 212.

Each of the onboard information devices 300 comprises a central calculating device 310, a storage device 320, an input device 330 such as a keyboard or a mouse or the like, an output device 340 such as a display or the like, and a communication unit 350. Moreover, based on the communication standard of a cable network or CAN (Controller Area Network) or the like, the onboard information device 300 is capable of communicating, with a position measurement device 360 that operates based on the GPS (Global Positioning System) standard or the like, a camera device 370, and an ECU (Electronic Control Unit) group 380 of the vehicle, and, according to requirements, is capable of acquiring information from those devices. It should be understood that it would be acceptable for the input device 330 and the output device 340 to be the same device, such as a touch panel for example. Moreover, the position measurement device 360 and the camera device 370 could be housed within the onboard information device 300. A car navigation terminal or a smart phone or a driving recorder or the like, mounted to the automobile, or a combination thereof, is considered as being such an onboard information device 300.

The central calculating device 310 is a computer, and may comprise, for example, a CPU and RAM or the like. Various types of functions of the onboard information device 300 that will be described hereinafter are implemented by the central calculating device 310 executing a predetermined operating program. The central calculating device 310 includes a probe accumulation processing unit 311 that generates and accumulates probe data corresponding to changes of the vehicle state and so on obtained from input from the user or from the ECU, a probe transmission processing unit 312 that transmits this accumulated probe data to the telematics center 100 according to input from the user of the onboard information device 300 or the like, and so on.

The storage device 320 may, for example, comprises an HDD, an SSD, a flash memory, a ROM, or the like. A computer program executed by the central calculating device 310 and groups of data required for execution of this computer program and so on are stored in the storage device 320. Probe information 321 that has been accumulated by the probe accumulation processing unit 311 and so on is stored in the storage device 320.

The communication unit 350 comprises a network card or the like that is compatible with a communication standard required for cable communication via a cable LAN or for wireless communication via a wireless LAN, or both or the like. The communication unit 350 transmits and receives data to and from the telematics server 100 based on data protocols of various types. The data transmitted from the telematics server 100 is delivered to the probe information processing unit 312.

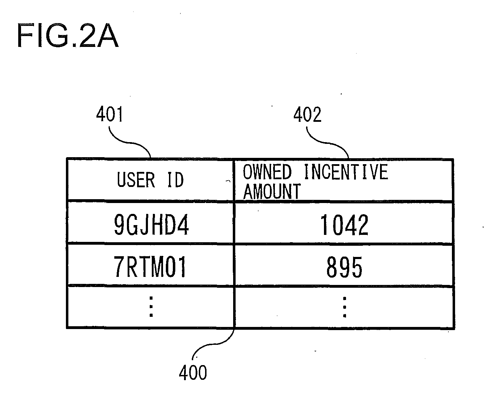

FIGS. 2A-2C show an example of a data format for the user information 121 and the probe request information 122 stored in the storage device 120 of the telematics center 100. The user information 121 is generated and updated by the probe information reception unit 111 of the central calculating device 110 included in the telematics center 100. Probe request information 122 is generated by the condition specification reception unit 113 of the central calculating device 110 included in the telematics center 100, and a provided incentive amount and an acquisition completed trip ID that will be described hereinafter are updated by the probe information reception unit 111.

A user management table 400 like the one shown in FIG. 2A is stored in the user information 121. The user management table 400 comprises user IDs 401 that are identifiers for uniquely specifying users of onboard information devices 300 that upload probe data, and owned incentive amounts 402 that specify respective incentive amounts that these users own.

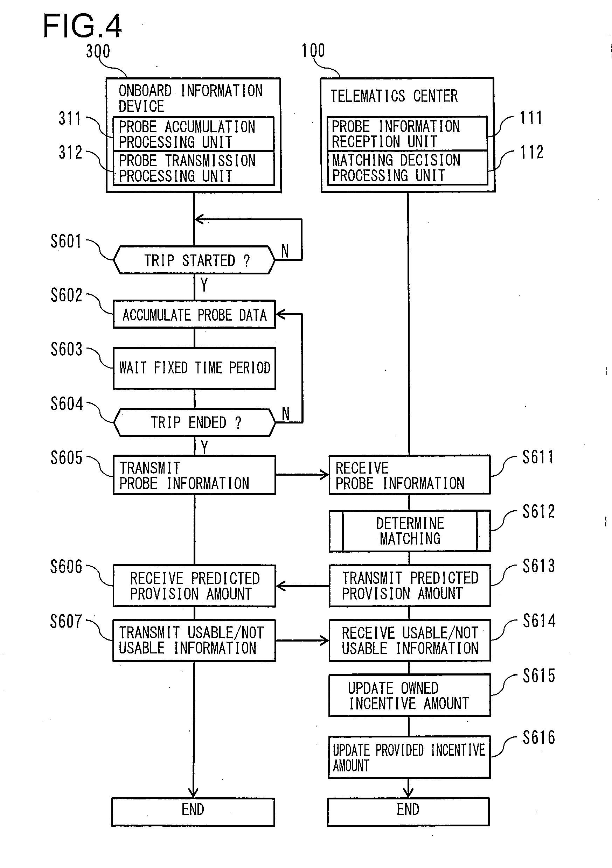

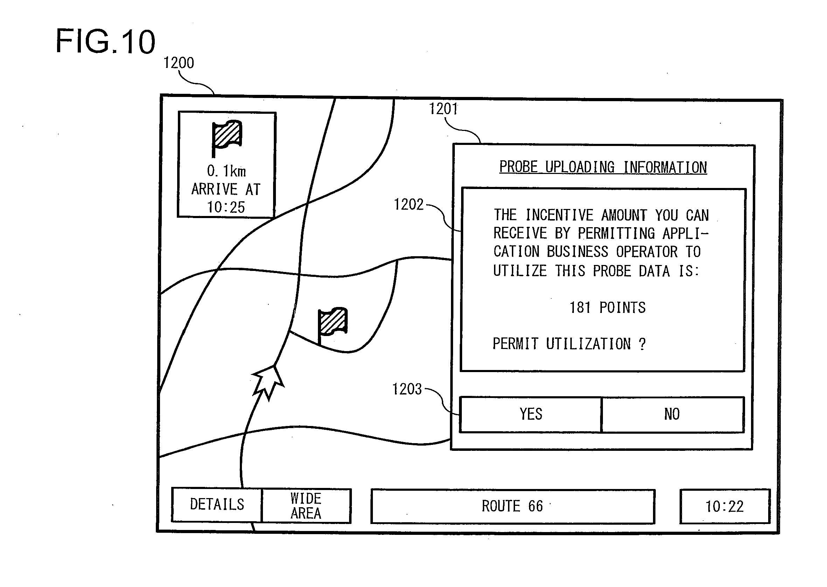

As will be described hereinafter with reference to FIG. 4 and FIG. 10, when probe data uploaded to the probe information 123 in the storage device 120 included in the telematics center 100 can be utilized by the application server 200, in other words when this probe data has been permitted to be acquired by the probe information acquisition unit 212 of the central calculating device 210 included in the application server 200, then the cumulative value of incentive amount for each user provided upon the user of the onboard information device 300 is held in the owned incentive amount 402 for each user. For example, the user of the onboard information device 300 may receive a benefit in money or goods, or via supply of services or the like, according to the value shown by the owned incentive amount 402. If the user has received a benefit in money or goods or via supply of services or the like in this manner, then, for example, it is considered that, in response to a request from a different central calculating device that executes a different computer program upon the system that includes the telematics center 100 and/or the application server 200, the central calculating device 110 of the telematics center 100 may subtract the value from the value that the owned incentive amount 402 represents.

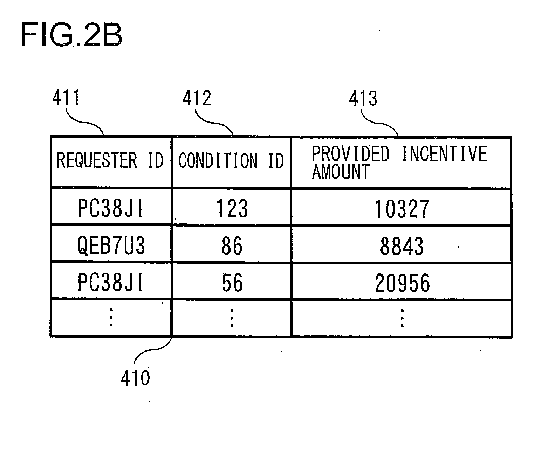

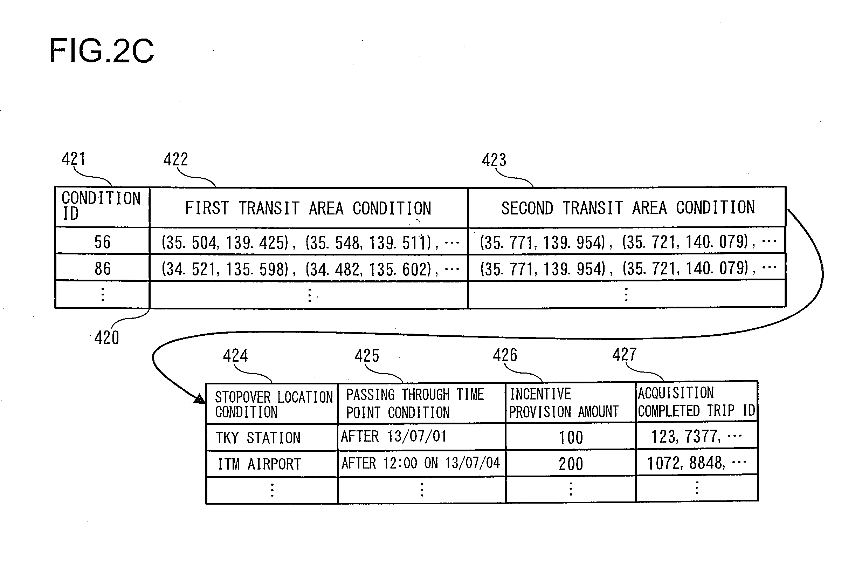

A requester management table 410 shown in FIG. 2B and a probe request condition table 420 shown in FIG. 2C are stored in the probe request information 122. The requester management table 410 comprises requester IDs 411 that are identifiers for uniquely specifying application servers 200 that request probe data or the users of those application servers 200, condition IDs 412 that are identifiers for uniquely specifying the conditions related to the probe data respectively requested by these application servers 200 to the telematics center 100, and provided incentive amounts 413 that manage the incentive amounts actually provided based on those conditions. It would also be acceptable for the application servers 200 to specify a plurality of conditions. Accordingly, it is possible for a plurality of condition IDs 412 to be linked to one requester ID 411.

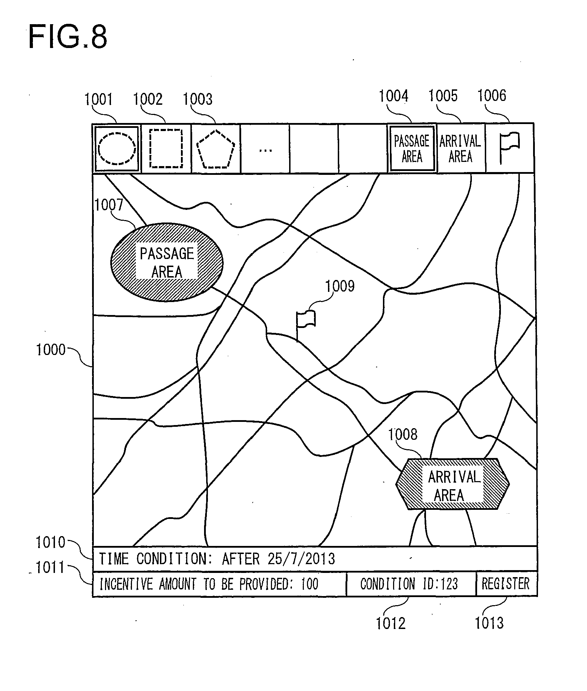

The probe request condition table 420 comprises: condition IDs 421 that are identifiers for uniquely specifying conditions related to probe data; first transit area conditions 422 that, as detailed conditions, specify ranges upon the map through which tracks specified by probe data must pass between their start points and the stopover location; second transit area conditions 423 that specify ranges upon the map through which tracks specified by probe data must pass between the stopover location described above and their end points; stopover location conditions 424 that specify POIs (Points Of Interest) upon the map through which the tracks specified by probe data must pass as the stopover location described above; passing through time point conditions 425 that specify conditions for data acquisition time points that probe data must satisfy; incentive provision amounts 426 that specify incentive amounts provided corresponding to probe data satisfying the conditions described above; and acquisition completed trip IDs 427 that specify probe data that can be employed by incentive amounts actually being provided. In this embodiment, when the vehicle to which the onboard information device 300 that generates the track specified by the probe data is mounted is to be considered as passing through a stopover location, it is desirable for that vehicle not merely to pass through this stopover location, but for it to depart from this stopover location after having stopped in that stopover location or having been left parked there. In this case, a ground point through which that vehicle simply passes is not considered as being a stopover location. Upon the map, both the first transit area conditions 422 and the second transit area conditions 423 are displayed as ranges shown by polygons, as will be explained hereinafter with reference to FIG. 8. For each of the first transit area conditions 422 and the second transit area conditions 423, series of points of position information related to ground points at which vertices of the polygons described above are positioned are held by their latitudes and longitudes in the order of adjacent vertices.

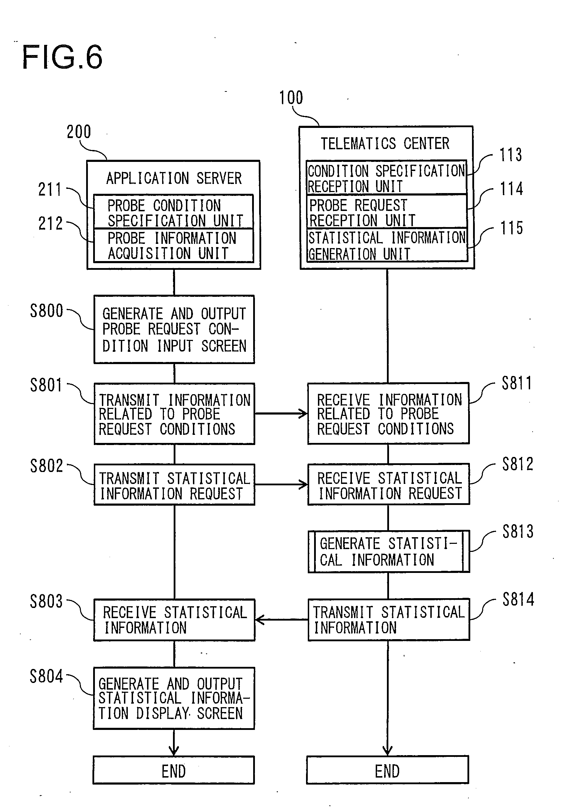

As will be described hereinafter with reference to FIG. 6 and FIG. 8, when a conditions corresponding to condition IDs 412 are specified to the probe request condition table 420 stored in the probe request information 122 of the storage device 120 included in the telematics center 100 by the probe condition specification unit 211 of the central calculating device 210 included in the application server 200, incentive amounts specified by the user of the application server 200 are set by the condition specification reception unit 113 of the central calculating device 110 in the incentive provision amount 426. As will be described hereinafter with reference to FIG. 4, each time that an incentive amounts set in the incentive provision amount 426 corresponding to a condition IDs 412 are provided upon the user of the onboard information device 300 by the probe information reception unit 111 of the central calculating device 100 included in the telematics center 100, the cumulative value of the incentive amounts that have been provided up until this time point is stored in the provided incentive amount 413 for that condition ID. The manager of the telematics center 100 may receive a usage charge payment from the user of the application server 200, corresponding to the value specified by the provided incentive amount 413, for example.

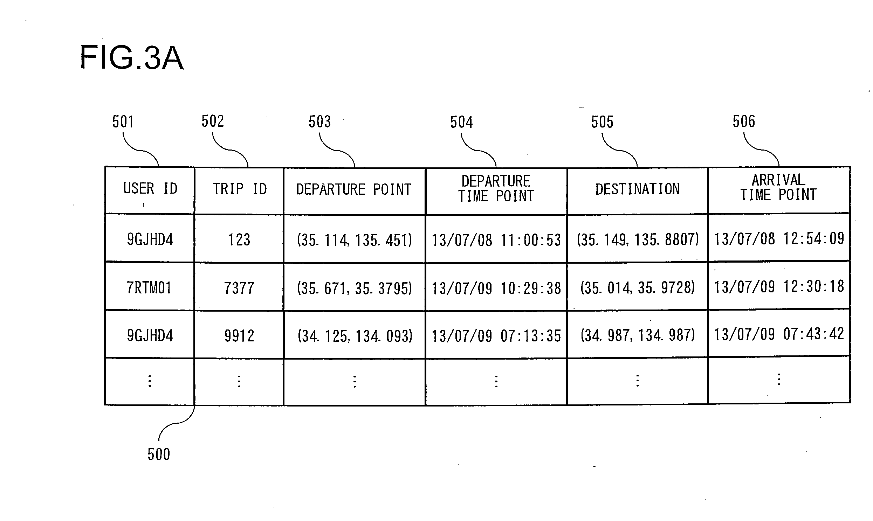

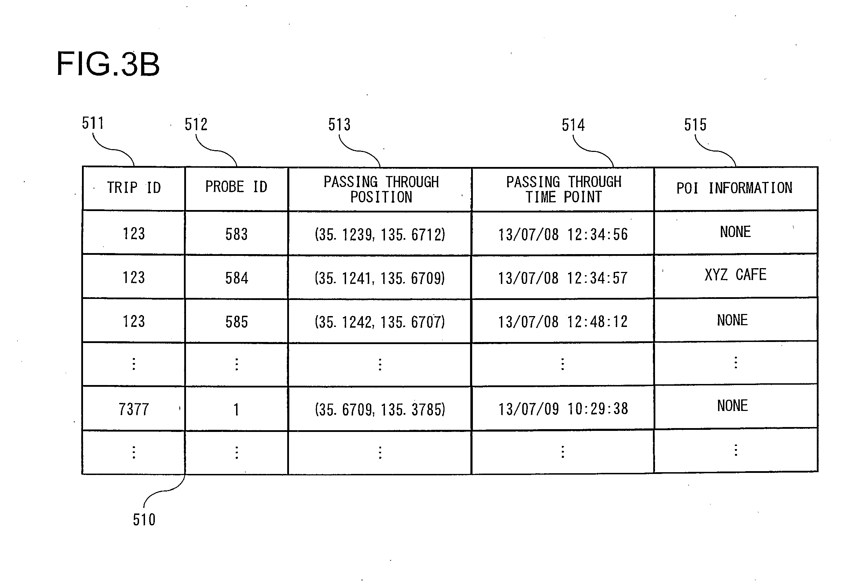

Examples are shown in FIGS. 3A-3B of the format of the probe information 123 in the storage device 120 included in the telematics center 100, and of the format of the probe information 321 in the storage device 320 included in the onboard information device 300. A user trip management table 500 and a trip details information management table 510 are stored in each of the probe information 123 and the probe information 321. The user trip management table 500 comprises: user IDs 501 specifying users who have uploaded probe data; trip IDs 502 that are identifiers for uniquely specifying series of uploaded probe data for moving from departure points to destinations, in other words for trips; departure points 503 that specify position information for the departure points of the corresponding trip IDs, expressed in terms of latitude and longitude; departure time points 504 that specify the time points of leaving these departure points of the corresponding trip IDs; destinations 505 that specify position information for the final arrival points of the corresponding trip IDs, expressed in terms of latitude and longitude; and arrival time points 506 that specify the time points of arriving at these arrival points of the corresponding trip IDs.

The trip details information management table 510 comprises: probe IDs 512 that are identifiers for uniquely specifying probe data at some instant during one trip corresponding to these trip ID 511 that are subjects of detailed information; passing through positions 513 showing position information of the ground points for which the data of the corresponding probe IDs was acquired; passing through time points 514 showing the time points when the data of the corresponding probe IDs was acquired; and POI information 515 showing linked facility information corresponding to the passing through positions 513. The probe ID data indicates the vehicle traveling history at some instant during traveling. Accordingly, a single trip may be expressed in the format of a series of moving points by linking a plurality of probe IDs to a single trip ID. In this embodiment, when the vehicle to which the onboard information device 300 which has generated the track specified by the probe data is mounted is to be considered as passing through a facility POI corresponding to the POI information 515, it is desirable for that vehicle not merely to pass through this facility POI, but for it to depart from that facility POI after having stopped in that facility POI or having been left parked there. In this case, a facility POI through which the vehicle merely passes is not registered in the POI information 515.

For this probe information management system, FIG. 4 shows a flow chart for accumulation and transmission of probe information and for incentive provision processing between the probe information reception unit 111 and the matching decision processing unit 112 of the telematics center 100, and the probe accumulation processing unit 311 and the probe transmission processing unit 312 of the onboard information device 300.

Referring now to the FIG. 4 flow chart, the probe accumulation processing unit 311 of the onboard information device 300 checks whether or not the automobile to which the onboard information device 300 is mounted is currently moving, in other words whether or not a trip has started (step S601). As methods that the onboard information device 300determinds that the automobile has started a trip, there may be considered (i) determining that power has been supplied to the onboard information device 300 by the ignition of the automobile being turned on so that the onboard information device 300 has started operating, or (ii) determining that starting of the engine of the automobile has been detected via the ECU group 380, or (iii) determining that transition has occurred from a state in which there is no change of the position information obtained from the position measurement device 360 over long term, to a state in which change of this position information has started, or the like.

If trip starting cannot be detected, then step S601 is executed after having waited for a fixed time period. If trip starting has been detected, then at this time point the probe accumulation processing unit 311 accumulates probe data in the probe information 321 (step S602). As information to be accumulated as probe data, there may be considered (i) current position information for the automobile, obtained from the position measurement device 360, or (ii) current time point information (i.e. information probe data generation time point) obtained by utilizing a clock internal to the onboard information device or from the position measurement device 360, or (iii) information flowing upon the CAN, such as the speed of the automobile or the fuel remaining amount as obtained from the ECU group 380, or the like. It would also be acceptable to accumulate image data photographed by the camera device 370 as probe data.

The probe accumulation processing unit 311, which has accumulated probe data up to the instant at some time point, after waiting for a fixed time period (step S603), determines whether or not the moving of the automobile (i.e. the trip) has ended (step S604). As methods to be employed for determining that the trip has ended, there may be considered (i) determination via the ECU group 380 that the engine of the automobile has stopped, or (ii) determination that there has been no change of the position information obtained from the position measurement device 360 over long term, or the like. It should be understood that, if a destination has been set in advance upon the onboard information device 300, then it would also be acceptable to employ, as a standard for determination, whether or not the state in which the differences in latitude and longitude between those of the destination and those of the current position are less than certain values respectively.

If the trip has not ended, then step S602 is executed again in order to accumulate further probe data. However, if it is detected that the trip has ended, then the probe transmission processing unit 312 transmits the probe data that has been accumulated from the start to the end of the trip to the telematics center 100 (step S605). It should be understood that it would also be acceptable to arrange for the start and the end of the trip not to be determined by the onboard information device 300 by itself, but rather to be decided by the start and end being inputted by the user via the input device 330.

The probe information reception unit 111 of the telematics center 100 receives the probe data transmitted from the onboard information device 300 and accumulates it in the probe information 123 (step S611). When the probe information is accumulated, the probe information reception unit 111 of the telematics center 100 decides whether or not, during travel, the onboard information device 300 that generated that probe data stayed at some facility POI, based on the POI information accumulated in the map information 124 and ground point information related to latitude and longitude, and from the ground points through which the probe data that has been received shows that the track passed and the time period required for passing through those ground points in order. If the probe information reception unit 111 decides that the onboard information device 300 stayed at this facility POI, then it inputs the facility name of this facility POI to the POI information 515 as information linked to the probe ID of the ground point that corresponds to the position of this facility POI. It should be understood that the processing for determining upon staying at this facility POI need not be executed during traveling by the telematics center 100; it would also be acceptable for this determination to be performed by the onboard information device 300 possessing map information equivalent to the map information 124 by using its own map information.

Then the matching decision processing unit 112 decides whether or not the probe data transmitted from the onboard information device 300 coincides with a request by referring to the probe request information 122 that was already registered, and, if there is such coincidence, calculates what amount of incentive is to be provided (step S612). The details of the step S612 will be explained hereinafter with reference to FIG. 5.

When the incentive amount to be provided (i.e. the total incentive provision amount) has been calculated by the processing of step S612 performed by the matching decision processing unit 112, then the probe information reception unit 111 takes this total incentive provision amount as a predicted incentive provision amount, and returns information related to this predicted incentive provision amount to the onboard information device 300 (step S613).

The probe transmission processing unit 312 of the onboard information device 300 receives this information related to the predicted incentive provision amount transmitted from the telematics center 100 (step S606). The probe transmission processing unit 312 displays this received information upon the output device 340 by including it in a query screen that will be described hereinafter with reference to FIG. 10, and, via the input device 330, receives from the user of the onboard information device 300 information related to whether or not the probe data that has been uploaded can be utilized. The probe transmission processing unit 312 transmits this information related to whether or not the received probe data can be utilized to the telematics center 100 (step S607). It should be understood that it would also be acceptable for input related to a minimum provision incentive approval amount was performed in advance by the user upon the onboard information device 300, and, in this case, if an incentive provision amount that is greater than this minimum provision incentive approval amount is notified from the telematics center 100, then information to the effect that the received probe data can be utilized is automatically transmitted by the probe transmission processing unit 312 to the telematics center 100, while, if an incentive provision amount that is less than this minimum provision incentive approval amount is notified from the telematics center 100, then information to the effect that the received probe data cannot be utilized is automatically transmitted by the probe transmission processing unit 312 to the telematics center 100.

The probe information reception unit 111 of the telematics center 100 receives this information as to whether or not the probe data can be utilized (step S614). If this usable/not usable information shows that the probe data can be utilized, then, in the probe request information 122 specified by the corresponding condition ID 421, the probe information reception unit 111 registers the trip ID of the probe data uploaded this time in the acquisition completed trip ID 427. The probe information reception unit 111 updates the owned incentive amount 402 by adding to it the incentive provision amount obtained this time to the owned incentive amount 402 corresponding to the user ID 401 of the user of the onboard information device 300 that transmitted the probe data in the user information 121 (step S615). In the probe request information 122 specified by the corresponding condition ID 421, the probe information reception unit 111 updates the provided incentive amount 413, by adding an incentive provision amount of the incentive provided upon the user of the onboard information device 300 that transmitted the probe data, to the provided incentive amount 413 (step S616).

FIG. 5 shows the flow, in this probe information management system, of the processing performed by the matching decision processing unit 112 of the telematics center 100 in step S612. In the processing according to the flow chart shown in FIG. 5, the matching decision processing unit 112 calculates the total amount of incentive predicted to be provided for the probe data transmitted by the onboard information device 300, in other words calculates the total incentive provision amount. The matching decision processing unit 112 sets the total incentive provision amount to zero firstly (step S700).

From among the records of probe request conditions uniquely specified by condition IDs managed with the probe request condition table 420 of the probe request information 122, the matching decision processing unit 112 acquires one record for which no incentive amount has yet been calculated (step S701). The matching decision processing unit 112 determines whether or not the transmitted probe data from by the onboard information device 300, i.e. the departure time point 504 and the arrival time point 506 managed by the trip ID 502, satisfy the conditions managed by the passing through time point condition by referring the passing through time point conditions 425 included in the record of the acquired probe request conditions.

If the condition is satisfied, then the matching decision processing unit 112 refers to the first transit area condition 422 included in the record of the probe request conditions, and checks whether or not the passing through position 513 corresponding to any of the probe IDs 512 making up the trip is present within the range specified by the first transit area condition 422 (step S703). If the condition is satisfied, then the matching decision processing unit 112 refers to the second transit area condition 423 included in the record of the probe request conditions, and checks whether or not the passing through position 513 corresponding to any of the probe IDs 512 making up the trip is present within the range specified by the second transit area condition 423 (step S704).

If the condition is satisfied, then the matching decision processing unit 112 refers to the stopover location condition 424 included in the record of the probe request conditions, and checks whether or not the POI information 515 corresponding to any of the probe IDs 512 making up the trip and the facility POI specified in the stopover location condition 424 accord with one another (step S705). If a facility name of the facility POI or the like is registered in the stopover location condition 424, then the matching decision processing unit 112 checks whether this facility name and the facility name that is registered in the POI information 515 accord with one another. It would also be acceptable, after having converted the facility name of the facility POI in the stopover location condition 424 to a ground point based on its latitude and longitude by employing the map information 124, to perform checking by comparing this ground point with the passage through ground points 513.

If this condition is satisfied, then the matching decision processing unit 112 refers to the incentive provision amount 426 included in the record of the probe request conditions, and, after having added the value registered in the incentive provision amount 426 to the total incentive provision amount to be provided corresponding to that probe data, registers the ID of this trip data in the acquisition completed trip IDs 427 included in the record of the probe request conditions (step S706). It should be understood that the information transmitted by the application server 200 related to the incentive provision amount is not limited to being a positive value. Moreover, this information transmitted by the application server 200 related to the incentive provision amount need not be a fixed value; it would also be acceptable for it to be calculated as will now be described. For example, the telematics center 100 may calculate the incentive provision amount based upon an equation by which it is possible to calculate based on the distance relationship between the passage area and the passing through position, the distance relationship between the arrival area and the arrival ground point, the number of items of probe data registered in the acquisition completed trip ID 427 at the time point that the probe data was uploaded, and so on, and also upon other information registered in various databases like the probe information 123, the probe request information 122 and the like.

The matching decision processing unit 112 checks whether or not checking of the probe data has been completed for all of the probe request information 122 (step S707), and, if checking has not been completed for all the information, executes the processing from step S701 onward again in order to calculate the total incentive provision amount for the records of the probe request condition that have not been checked. It should be understood that, if any one of the conditions decided upon in steps S702 through S705 is not satisfied, then the matching decision processing unit 112 executes the processing of step S707 immediately.

It would also be acceptable to vary the sequence of processing in steps S702 through S705. For example, as a decision standard, it would be possible to check the condition related to the first arrival area. Moreover, in the probe condition specification, it is not necessary to input all of the conditions such as the passage area, the arrival area, and so on; if some condition has not been inputted in this way, then the processing corresponding to that condition need not be executed.

For this probe information management system, FIG. 6 shows the flow of condition specification of a probe information request, for the probe information request resulting from the condition specification, and for display processing of the probe information, between the condition specification reception unit 113, the probe request reception unit 114, and the statistical information generation unit 115 of the telematics center 100, and the probe condition specification unit 211 and the probe information acquisition unit 212 of the application server 200.

In FIG. 6, the probe condition specification unit 211 of the application server 200 acquires map data for display accumulated in the map information 124 of the telematics center 100, and displays a map upon the output device 240 as a map screen. And, along with this map screen, the probe condition specification unit 211 outputs upon the output device 240 a condition input screen for the user of the application server 200 to input, via the input device 230, specification conditions for probe information to be requested, such as passage area, arrival area, stopover location, and acquisition time point of probe data, and also information related to an incentive provision amount to be provided corresponding to specified probe data that satisfies these specification conditions (step S800). This condition input screen will be described hereinafter with reference to FIG. 8. When the specification conditions and the information related to the incentive provision amount are inputted upon the condition input screen by the user of the application server 200, then the probe condition specification unit 211 transmits this information that has been inputted to the telematics center 100 as probe condition specification information, along with its condition ID (step S801).

The condition specification reception unit 113 of the telematics center 100 receives the probe condition specification information related to the probe request conditions transmitted from the application server 200, and accumulates this information in the probe request information 122 (step S811). It should be understood that, when accumulating the probe condition specification information related to the probe request conditions in the probe request information 122, it would also be acceptable to be performed the processing of steps S612 through S614 shown in FIG. 4. In other words, if probe data, which was already been uploaded before this data is accumulated in the probe request information 122, satisfies the specification conditions, it would be possible to calculate the total incentive provision amount (i.e. the predicted incentive provision amount), and to query the user as to whether this previous probe data can be utilized or not.

After a fixed time period has elapsed from transmission of the probe request conditions by the probe condition specification unit 211 in step S801, the probe information acquisition unit 212 of the application server 200 transmits a statistical information request specifying these probe request conditions to the telematics center 100 (step S802), in order to obtain statistical data based upon the results of gathered probe data that satisfies these probe request conditions.

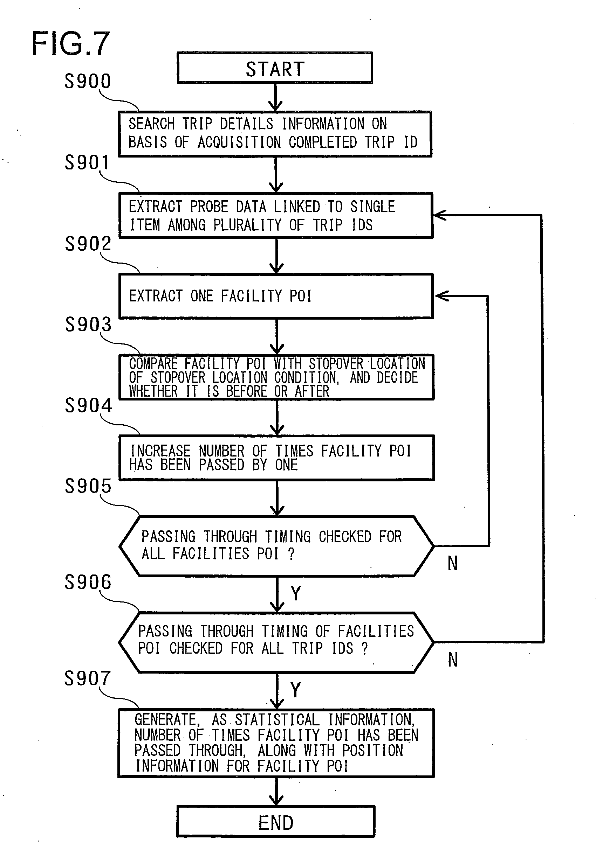

The probe request reception unit 114 of the telematics center 100 receives this statistical information request from the application server 200 (step S812). The statistical information generation unit 115 refers to the acquisition completed trip ID 427 registered in the record of the condition ID 421 corresponding to the probe request conditions specified by this statistical information request, and generates statistical information related to the probe data based on one or a plurality trip IDs inputted to the acquisition completed trip ID 427 (step S813). The details of the processing performed in step S813 will be explained hereinafter with reference to FIG. 7.

When this statistical information has been generated by the statistical information generation unit 115, along with the conditions such as the first transit area condition 422, the second transit area condition 423, and so on linked to the condition ID 421 registered in the probe request information 122, and along with the map data for display accumulated in the map information 124, the probe request reception unit 114 transmits this statistical information that has been generated to the application server 200 (step S814).

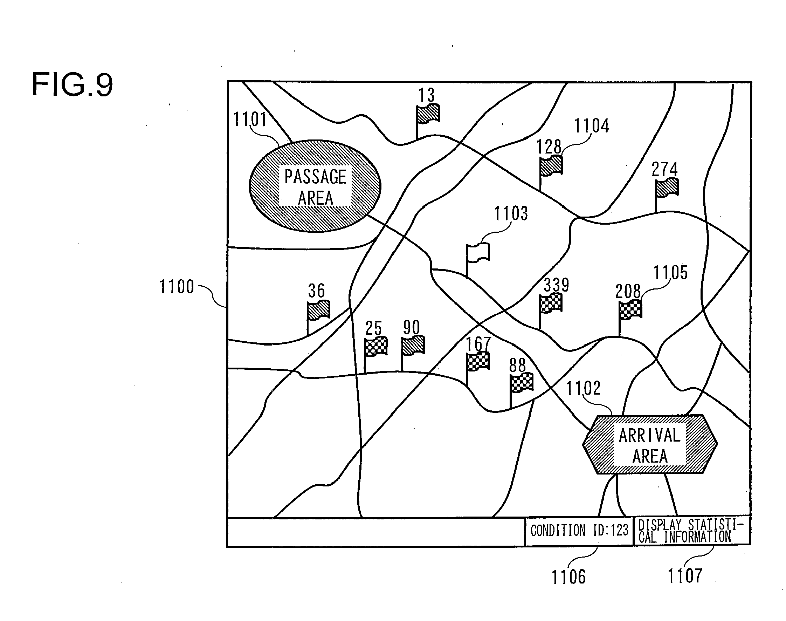

The probe information acquisition unit 212 of the application server 200 receives the statistical information transmitted from the telematics center 100 (step S803),, generates an information display screen that will be described hereinafter with reference to FIG. 9, by combining the map information based upon the map data, and outputs this screen to the output device 240 (step S804). It should be understood that it would also be acceptable for statistical data to be acquired periodically, by the application server 200 periodically executing the processing of steps S802 and S803.

The data that the application server 200 requests to the telematics center 100 is not limited to being only statistical values; it would also be acceptable for the probe data registered in the probe information 123 itself to be requested. In this case, it would be acceptable for the telematics center 100 to transmit to the application server 200, on a fixed cycle, probe data that accords with the conditions determined in the record of the condition ID 421. Moreover it would also be possible, each time that probe data satisfying the conditions determined in the record of the condition ID 421 is received, for the telematics center 100 to transmit this probe data to the application server 200.

For this probe information management system, FIG. 7 shows the flow of processing performed by the statistical information generation unit 115 of the telematics center 100 in step S813. In FIG. 7, in the record of the condition ID 421 corresponding to the probe request conditions specified by the statistical information request transmitted from the application server 200, the statistical information generation unit 115 refers to the acquisition completed trip ID 427 that uniquely specifies the probe information that has been gathered, and acquires the detailed trip information for from the trip details information management table 510 based on one or a plurality of trip IDs 427 registered in the acquisition completed trip ID 427 (step S900).

From the trip details information acquired in step S900, the statistical information generation unit 115 acquires the probe data corresponding to the plurality of probe IDs 512 that are linked to one trip ID 511 (step S901). And, for this probe data, one item from among the one or a plurality of items of facility POI information registered in the POI information 515 in the trip details information management table 510 is acquired (step S902).

The statistical information generation unit 115 determines whether the timing at which the vehicle to which the onboard information device 300 that has generated this probe data is mounted passed the facility POI is earlier than the timing at which this vehicle passed the stopover location registered in the stopover location condition 424 of the probe request condition table 420, or is later (step S903). Since the probe data that is the subject of processing is probe data that is registered in the acquisition completed trip ID 427 of the trip details information management table 510, accordingly, for any probe ID 512, facility information that accords with the stopover location registered in the stopover location condition 424 is certainly stored in the POI information 515. In step S903, the statistical information generation unit 115 decides whether or not, before the vehicle to which the onboard information device 300 that generated this probe data is mounted passed through the stopover location registered in the stopover location condition 424, it passed the facility POI acquired in step S902; for example, this may be decided based on whether the timing thereof is an earlier timing than the moment of the passing through time point 514 linked to the POI information 515, or is a later timing.

After the timing at which the vehicle to which the onboard information device 300 that generated the above probe data is mounted passed the facility POI corresponding to the POI information 515 has been ascertained in step S903, the statistical information generation unit 115, after having determined this timing, increments by one the number of times that facility POI has been passed (step S904). It should be understood that in this step S904 it would also be acceptable not to perform the processing for increasing the number of times of passing, for all of the facilities POI corresponding respectively to all of the POI information 515 that is registered in the probe ID 512 linked to the acquisition completed trip ID 427. For example, it would be acceptable to increase the number of times of passing through, only for a facility POI corresponding to the POI information 515 that was passed through immediately before, or immediately after, the vehicle passed the stopover location corresponding to the stopover location condition 424. Thereafter it is checked whether or not, for all of the probe IDs 512 that are linked to this trip ID 511, checking has been completed as to whether the timing of passing through the facility POI corresponding to the POI information 515 is earlier than, or is later than, the timing of passing through the stopover location corresponding to the stopover location condition 424 (step S905). If as yet checking has not been performed for all of the POI information 515, then the processing of step S902 and subsequent steps is executed again.

If in step S905 it has been decided that, for all of the probe IDs 512 for this trip ID 511, checking of the passing through timing information has been completed for all of the facilities POI, then it is checked whether or not checking of the passing through timing information for the facilities POI has been completed for all of the trip IDs 511 registered in the acquisition completed trip ID 427 (step S906). If checking has not been completed for all of the trip IDs 511, then, in order to check the passing through timing information of the facility POIs for the remaining trip IDs 511, the processing of step S901 and subsequent steps is executed again.

When it has been determined in step S906 that, for all of the trip IDs, the passing through timing information for the facilities POI has been checked, then the total value of the number of times of passing through a facility POI, for which it was considered separately whether the timing of passing through the facility POI, obtained in step S904, was before, or was after, passage through the stopover location registered in the stopover location condition 424, is generated as statistical information, along with the position information for this facility POI (step S907).

For this probe information management system, FIG. 8 shows an example of a condition input screen that is displayed in step S801 of FIG. 6 upon the output device 240 of the application server 200, in order for the probe condition specification unit 211 of the application server 200 to specify, for the condition specification reception unit 113 of the telematics center 100, specification conditions for the specified probe information for which the probe information acquisition unit 212 of the application server 200 is to request the matching decision processing unit 112 of the telematics center 100 to perform matching. Control is performed by the probe condition specification unit 211 in order for this condition input screen to be displayed upon the output device 240. The user of the application server 200 specifies the specification conditions for the specified probe information upon this condition input screen by using the input device 230.

Upon the condition input screen displayed upon the output device 240 in FIG. 8, there are displayed: a map 1000; buttons 1001, 1002, and 1003 that are tools for specifying input for drawing circular or polygonal areas upon the map 1000 as a passage area and an arrival area corresponding respectively to the first transit area condition 422 and to the second transit area condition 423 of FIG. 2C; buttons 1004 and 1005 that specify which of the passage area and the arrival area is to be drawn; a button 1006 that is selected when specifying a stopover location corresponding to the stopover location condition 424 of FIG. 2C; a region 1007 that displays the passage area that is actually specified upon the map; a region 1008 that displays the arrival area that is actually specified upon the map; an icon 1009 that displays the stopover location that is actually specified upon the map; an input field 1010 for specifying a condition upon the acquisition time point of the probe data that is the subject of being gathered, corresponding to the passing through time point condition 425 of FIG. 2C; an input field 1011 for specifying an incentive provision amount to be provided upon specified probe data that satisfies the specification conditions, corresponding to the incentive provision amount 426 of FIG. 2C; an input field 1012 for specifying the condition ID 421 of FIG. 2C; and a button 1013 for performing transmission of information related to the probe request conditions (i.e. to the specification conditions) to the telematics center 100 in step S801 of FIG. 6.

By selecting one from among the three buttons 1001, 1002, and 1003 and one from among the two buttons 1004 and 1005, the user of the application server 200 is able to specify upon the map the passage area and the arrival area that he desires by performing drawing input of a drawing shaped as a closed ellipse or polygon or the like. It is possible to specify the size of the passage area and the arrival area by, for example, dragging and dropping the closed drawing described above upon the map. And it is also possible, once the regions 1007 and 1008 have been specified, to shift them to any desired ground point upon the map by dragging and dropping them.

When the button 1006 has been selected, it is possible, by for example clicking upon the map, to specify a stopover location corresponding to the stopover location condition 424 in the probe request conditions. By the user of the application server 200 finally inputting the button 1013, the application server 200 generates information related to the probe request conditions based on the specification conditions that have been specified upon the screen shown in FIG. 8, and transmits this information to the telematics center 100, as explained with reference to FIG. 6.

It should be understood that it would also be possible to display buttons upon the condition input screen shown in FIG. 8 that perform enlargement and reduction of the map image, with the objective of assisting input of the passage area and the arrival area. With the objective of assisting input of the passage area and the arrival area, it would also be acceptable, by inputting the name of any desired ground point, for a ground point input field to be displayed upon the condition input screen shown in FIG. 8, in order to move the display of the map 1000 so that the latitude and longitude corresponding to this ground point appear in the center of the map. If the specification of the probe request conditions is insufficient, as if for example nothing is inputted into the input field 1010, then, when the button 1013 is clicked or the like, it would also be possible for a warning screen for issuing a notification to this effect to the user to be displayed upon the condition input screen shown in FIG. 8. Moreover, with the objective of correcting or deleting data already registered in the probe request information 122, it would also be possible for a button for displaying upon the map 1000 the details of the probe request conditions corresponding to the condition ID inputted in the input field 1012, or to provide a button for deleting information of the probe request conditions corresponding to the condition ID inputted in the input field 1012, to be displayed upon the condition input screen shown in FIG. 8.

FIG. 9 shows an example of an information display screen that is displayed upon the output device 240 of the application server 200 in order to display the statistical information received by the application server 200 as a result of the application server 200 having requested statistical information to the telematics center 100 in steps S802 and S803 of FIG. 6.

In FIG. 9, upon the output device 240, there are displayed: a map 1100; a region 1101 that corresponds to the first transit area condition 422 registered in the probe information request 122; a region 1102 that corresponds to the second transit area condition 423 registered in the probe information request 122; an icon 1103 that shows the stopover location that corresponds to the stopover location condition 424 registered in the probe information request 122; icons 1104 carrying sloping line patterns that indicate position information for facilities POI that the vehicle passed through, from within the passage area until moving to within the arrival area, before passing through the stopover location indicated by the icon 1103, and the total values of the numbers of times that these facilities POI have been passed through; icons 1105 carrying checkered patterns that indicate position information for facilities POI that the vehicle passed through, from within the passage area until moving to within the arrival area, after having passed through the stopover location indicated by the icon 1103, and the total values of the number of times that these facilities POI have been passed through; an input field 1106 for specifying a condition ID that is required when requesting statistical information to the telematics center 100; and a button 1107 for performing transmission of a statistical information request to the telematics center 100 based on the condition ID specified in the input field 1106, and for displaying the statistical information that is received.

Without anything being displayed at first upon the map 1100 in the information display screen displayed upon the output device 240, a condition ID is specified in the input field 1106, and, by clicking on the button 1107 and thus requesting statistical information to the telematics center 100, initially the regions 1101 and 1102 and the icons 103, 1104, and 1105 are displayed. It should be understood that it would also be acceptable, for example by selecting any one among the regions 1101 and 1102, or by selecting any one among the icons 103, 1104, and 1105, to display detailed information corresponding to the region selected in this manner or to the area specified by that icon, or to the stopover location or to a facility POI, such as scenery images for the facilities, or time periods utilized or the like.

In FIG. 10, for this probe management system, there is shown an example of a screen that is displayed upon the output device 340 of the onboard information device 300, in order for the onboard information device 300 to transmit the probe information to the telematics center 100 in steps S605 through S607 of FIG. 4, and in order to display the predicted incentive provision amount.

In FIG. 10, upon a query screen that is displayed upon the output device 340 of the onboard information device 300, there are displayed: a window 1200 in which a map, route guidance information, map operational buttons and so on are displayed; a window 1201 in which information related to the uploading of probe data is displayed; a window 1202 in which information related to the predicted incentive provision amount that it is predicted will be provided corresponding to probe data obtained by the vehicle to which the onboard information device 300 is mounted traveling this time is displayed; and buttons 1203 for asking the user of this onboard information device 300 whether or not the uploaded probe data is to be employed by the application server 200.

For example, directly after the vehicle to which the onboard information device 300 is mounted arrives at its destination, or directly before it arrives, the onboard information device 300 may transmit probe information to the telematics center 100, and may display the predicted incentive provision amount obtained as a result in the window 1202. If, for example, it is supposed that a touch panel or the like is used as the output device 340, then the user of the onboard information device 300 may touch the button 1203 in order to indicate his intention as to whether or not to permit the utilization by the application server 200 of the probe data that has been uploaded, in exchange for the predicted incentive provision amount displayed in the window 1202. The onboard information device 300 transmits this intention result related to whether the probe data is to be utilized or not to the telematics center 100.

The central calculating device 210 of the application server 200 that is included in the structure of the probe information management device of the probe information management system according to the present embodiment includes the probe condition specification unit 211 and the probe information acquisition unit 212. In step S800 of FIG. 6, the probe condition specification unit 211 generates a condition input screen (refer to FIG. 8) for the user of the application server 200 to designate, using the input device 230, specification conditions that include a passage area, a stopover location, an arrival area, and a date and time, and outputs the condition input screen to the output device 240. And, in step S802 and step S803 of FIG. 6, the probe information acquisition unit 212 acquires as specified probe information, based on the specification conditions, statistical information based upon probe data corresponding to the moving history of a vehicle that has passed through, in order, a ground point within the passage area, the stopover location, and a ground point within the arrival area. As shown in FIG. 8, each of the passage area and the arrival area is specified by drawing input that is implemented using the input device 230 by pressing the button 1001, 1002, or 1003. When outputting the specified probe information to the output device 240 in step S800 of FIG. 6, the probe condition specification unit 211 outputs the passage area and the arrival area to the output device 240 as drawings. By employing this type of condition input screen, the user of the application server 200 is able simply and easily to specify the specification conditions to be satisfied by the specified probe information that is gathered in order to ascertain, before and after a common location passed through by vehicles that are traveling upon similar tracks, what type of facilities are often used by those vehicles.

In the application server 200 included in the structure of the probe information management device of the probe information management system according to the present embodiment, as shown in FIG. 8, the condition input screen includes the input field 1011 for the user of the application server 200 to specify, using the input device 230, an incentive provision amount corresponding to the specified probe information that satisfies the specification conditions. Due to this, the advantageous effects are provided to the user of the application server 200 that the amount of probe data uploaded to the telematics center 100 is increased, and that the reliability of the specified probe information is enhanced.

The central calculating device 110 of the telematics center 100 that is included in the structure of the probe information management device of the probe information management system according to the present embodiment includes the matching decision processing unit 112. In steps S702 through S705 of FIG. 5, the matching decision unit 112 decides whether or not the probe data corresponding to the moving history of the vehicle transmitted from the onboard information device 300 that moves along with the vehicle, in other words the probe information transmitted from the onboard information device 300, satisfies the specification conditions as the specified probe information, and, in the case of an affirmative decision, establishes in step S706 a linkage between the incentive provision amount specified by the probe condition specification unit 211 of the application server 200 and the user of the onboard information device 300. Due to this, the advantageous effect is obtained that the incentive of the user of the onboard information device 300 for uploading the probe data to the telematics center 100 is enhanced.

The central calculating device 110 of the telematics center 100 that is included in the structure of the probe information management device of the probe information management system according to the present embodiment further includes the probe information reception unit 111. Along with receiving the transmitted probe information in step S611 of FIG. 4, in step S613 the probe information reception unit 111 transmits the total incentive amount to the onboard information device 300 as the predicted incentive provision amount. In steps S701 through S705 after a negative decision in step S707 of FIG. 5, if the transmitted probe information transmitted from the onboard information device 300 accords with other probe information satisfying other conditions other than the specification conditions, then the matching decision processing unit 112 calculates the total incentive provision amount by adding an incentive amount corresponding to the other probe information satisfying the other conditions to the incentive provision amount corresponding to the specified probe information, as shown in step S706. In step S606 of FIG. 4, the onboard information device 300, along with notifying the user of the onboard information device 300 of that the total incentive amount in the transmitted probe information has been linked as the predicted incentive provision amount, also outputs the query screen (refer to FIG. 10) to the output device 340 of the onboard information device 300 in order to ask the user of the onboard information device 300 whether or not to permit the transmitted probe information to be acquired by the probe information acquisition unit 212 of the application server 200 as specified probe information that satisfies the specification conditions and as the other probe information that satisfies other conditions. Due to this, the advantageous effect is obtained that the incentive of the user of the onboard information device 300 for uploading the probe data to the telematics center 100 is further enhanced.

The central calculating device 110 of the telematics center 100 included in the probe information management device of the probe information management system according to the present embodiment also includes a statistical information generation unit 115. In steps S902 through S904 of FIG. 7, the statistical information generation unit 115 generates, as statistical information, the number of times, in the transmitted probe information satisfying the specification conditions transmitted from each of the plurality of onboard information devices 300, that the plurality of onboard information devices 300, after having stayed at least at one facility before or after the stopover location, have passed through that at least one facility by departing from that at least one facility. And, in step S803 of FIG. 6, the probe information acquisition unit 212 of the application server 200 acquires the statistical information that has been generated by the statistical information generation unit 115 of the telematics center 100 as the specified probe information; and, based on that statistical information, in step S804 the probe condition specification unit 211 of the application server 200 outputs to the output device 240, as the specified probe information, an information display screen that displays this number of times upon the map in the neighborhood of this at least one facility (refer to FIG. 9). Due to this, the user of the application server 200 is able to ascertain, before and after a stopover location that is common to vehicles traveling upon similar tracks, what type of facilities are often used by those vehicles.

For example, assuming that the user of the application server 200 is a proprietor of a shop. As the specification conditions inputted on the condition input screen shown in FIG. 8, this shop proprietor may specify this shop as the stopover location, and, along with specifying a passage area in the neighborhood of the shop and an arrival area, may also specify a desired date and time. As a result, as shown in the example screen of FIG. 9, the pass numbers for many of the vehicles that have visited this shop, for the facilities that they visited before visiting this shop, and for the facilities that they visited after visiting this shop, are obtained as statistical information, and are displayed on an information display screen upon the output device 240 of the application server 200. By studying this information display screen, the proprietor of this shop is able, for example, to draw up a management strategy for performing distribution of advertisements to the digital signage of those facilities that were passed through many times, at dates and times that he determines based on the past dates and times that were specified upon the condition input screen.

As another embodiment of the probe information management system, it would also be acceptable to arrange for the telematics center 100 to possess the functions of the application server 200. It would also be possible for the user of the application center 200 to set the probe request conditions directly to such a telematics center 100 that possesses the functions of the application server 200, or to request the statistical information directly.

As another embodiment of the probe information management system, it would also be acceptable for a probe accumulation server to be provided between the onboard information device 300 and the telematics center 100, and for this server to manage the probe data temporarily. In this case, for example, it may be considered to provide a system that acts as an intermediary for managing onboard information devices 300 of different classifications, and for this system to transmit the probe data to the probe accumulation server individually, or in summary form.

The embodiments described above have only been given by way of example; they could be modified in various ways without departing from the scope of the present invention.

## Claims

1. A probe information management device, comprising:
a probe condition specification unit (211) that generates a condition input screen for a first user to designate, using an input device (230), specification conditions including a first area, a stopover location, a second area, and a date and time, and that outputs the condition input screen to an output device (240); and
a probe information acquisition unit (212) that, based on the specification conditions, acquires specified probe information corresponding to a moving history of a vehicle that has passed through, in order, a ground point within the first area, the stopover location, and a ground point within the second area, wherein:
the first area and the second area are both specified by drawing input, using the input device (230); and
when outputting the specified probe information to the output device (240), the probe condition specification unit (211) outputs the first area and the second area to the output device (240) as drawings.

2. The probe information management device according to Claim 1, wherein
the condition input screen includes an input field for the first user to specify, using the input device (230), an incentive provision amount corresponding to the specified probe information that satisfies the specification conditions.

3. The probe information management device according to Claim 2, further comprising:
a matching decision unit (112) that decides whether or not transmitted probe information corresponding to the moving history of the vehicle, transmitted from an information device (300) that moves along with the vehicle, satisfies the specification conditions as the specified probe information, and, in the case of an affirmative decision, establishes a linkage between the specified incentive provision amount and a second user of the information device (300).

4. The probe information management device according to Claim 3, further comprising:
a probe information reception unit (111) that receives the transmitted probe information, and that transmits a total incentive amount to the information device (300), wherein
if the transmitted probe information transmitted from the information device (300) accords with other probe information satisfying other conditions other than the specification conditions, the matching decision unit (112) calculates the total incentive amount by adding incentive amount corresponding to the other probe information satisfying the other conditions to the incentive provision amount.

5. The probe information management device according to any one of Claims 1 through 4, further comprising
a statistical information generation unit (115) that generates, as statistical information, number of times, in the transmitted probe information satisfying the specification conditions transmitted from each of a plurality of the information devices (300), that the plurality of the information devices (300) have passed through at least one facility by departing from the at least one facility, after having stopped at the at least one facility before or after the stopover location, wherein:
the probe information acquisition unit (212) acquires the statistical information generated by the statistical information generation unit (115) as the specified probe information; and
based on the statistical information, the probe condition specification unit (211) outputs to the output device (240), as the specified probe information, an information display screen displaying, in the neighborhood of the at least one facility within the map, the number of times.

6. A probe information management system comprising:
a probe information management device according to Claim 1; and
an information device (300) that moves with the vehicle, wherein:
the probe information management device comprises a telematics center (100) and an application server (200);
the information device (300) generates the specified probe information and transmits the specified probe information to the telematics center (100);
the application server (200) includes the probe condition specification unit (211) and the probe information acquisition unit (212); and
the probe information acquisition unit (212) acquires the specified probe information from the telematics center (100).

7. The probe information management system according to Claim 6, wherein
the condition input screen includes an input field for the first user to specify, using the input device, an incentive provision amount corresponding to the specified probe information that satisfies the specification conditions.

8. The probe information management system according to Claim 7, wherein:
the information device (300) that moves with the vehicle generates transmitted probe information corresponding to the moving history of the vehicle, and transmits the transmitted probe information to the telematics center (100);
the telematics center (100) further includes a matching decision unit (112); and
the matching decision unit (112) decides whether or not the transmitted probe information transmitted from the information device (300) satisfies the specification conditions as the specified probe information, and, in the case of an affirmative decision, establishes a linkage between the specified incentive provision amount and a second user of the information device (300).

9. The probe information management system according to Claim 8, wherein:
if the transmitted probe information transmitted from the information device (300) accords with other probe information satisfying other conditions other than the specification conditions, the matching decision unit (112) calculates a total incentive amount by adding incentive amount corresponding to the other probe information satisfying the other conditions to the incentive provision amount;
the telematics center (100) further includes a probe information reception unit (111);
the probe information reception unit (111) receives the transmitted probe information, and transmits the total incentive amount to the information device (300); and
the information device (300), along with notifying the second user of that the total incentive amount is linked to the transmitted probe information, outputs to the output device (340) a query screen for asking the second user whether or not to permit the transmitted probe information to be acquired by the probe information acquisition unit (212) as the specified probe information satisfying the specification conditions and as the other probe information satisfying the other conditions.

10. The probe information management system according to any one of Claims 6 through 9, wherein:
the telematics center (100) further includes a statistical information generation unit (115);
the statistical information generation unit (115) generates, as statistical information, number of times, in the transmitted probe information satisfying the specification conditions transmitted from each of a plurality of the information devices (300), that the plurality of the information devices (300) have passed through at least one facility by departing from the at least one facility, after having stopped at the at least one facility before or after the stopover location;
the probe information acquisition unit (212) acquires from the telematics center (100) the statistical information generated by the statistical information generation unit (115) as the specified probe information; and
based on the statistical information, the probe condition specification unit (211) outputs an information display screen within the map in the neighborhood of the at least one facility displaying the number of times.

11. A probe information management method, comprising:
generating a condition input screen for a first user to specify, using an input device (230), specification conditions including a first area, a stopover location, a second area, and a date and time to output the condition input screen to an output device (240); and
acquiring specified probe information corresponding to the moving history of a vehicle that has passed through, in order, a ground point within the first area, the stopover location, and a ground point within the second area, based on the specification conditions, wherein,
each of the first area and the second area is specified by drawing input.

12. The probe information management method according to Claim 11, wherein
the condition input screen includes an input field for the first user to specify, using the input device (230), an incentive provision amount corresponding to the specified probe information that satisfies the specification conditions.

13. The probe information management method according to Claim 12, further comprising:
deciding whether or not transmitted probe information corresponding to the moving history of the vehicle, transmitted from an information device (300) that moves along with the vehicle, satisfies the specification conditions as the specified probe information; and
establishing a linkage between the specified incentive provision amount and a second user of the information device (300) in the case of an affirmative decision is made.

14. The probe information management method according to Claim 11, further comprising:
calculating a total incentive amount by adding another incentive amount corresponding to the other probe information satisfying the other conditions to the incentive provision amount, if the transmitted probe information transmitted from the information device (300) accords with other probe information satisfying other conditions other than the specification conditions; and
transmitting the total incentive amount to the information device (300).

15. The probe information management method according to any one of Claims 11 through 14, further comprising:
generating, as statistical information, number of times, in transmitted probe information satisfying the specification conditions transmitted from each of a plurality of information devices (300), that the plurality of the information devices (300) have passed through at least one facility by departing from the at least one facility, after having stopped at the at least one facility before or after the stopover location; and
outputting an information display screen displaying the number of times of passing in the neighborhood of the at least one facility within the map, based on the statistical information.
